(19) Europäisches Patentamt
European Patent Office
Office européen des brevets

(11) **EP 1 725 914 B1**

(12) **EUROPÄISCHE PATENTSCHRIFT**

(45) Veröffentlichungstag und Bekanntmachung des Hinweises auf die Patenterteilung:
**14.05.2008 Patentblatt 2008/20**

(21) Anmeldenummer: **05716943.5**

(22) Anmeldetag: **07.03.2005**

(51) Int Cl.:
*G03H 1/24* *(2006.01)*      *G03H 1/04* *(2006.01)*
*B32B 33/00* *(2006.01)*      *B42D 15/10* *(2006.01)*

(86) Internationale Anmeldenummer:
**PCT/EP2005/051013**

(87) Internationale Veröffentlichungsnummer:
**WO 2005/091085 (29.09.2005 Gazette 2005/39)**

(54) **HOLOGRAFISCHER DATENTRÄGER UND VERFAHREN ZU DESSEN HERSTELLUNG**

HOLOGRAPHIC DATA SUPPORT AND METHOD FOR PRODUCTION THEREOF

SUPPORT DE DONNEES HOLOGRAPHIQUE ET PROCEDE DE FABRICATION

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **15.03.2004 DE 102004012787**

(43) Veröffentlichungstag der Anmeldung:
**29.11.2006 Patentblatt 2006/48**

(73) Patentinhaber: **Bundesdruckerei GmbH**
**10969 Berlin (DE)**

(72) Erfinder:
• **EHREKE, Jens**
**10317 Berlin (DE)**
• **KNEBEL, Michael**
**10405 Berlin (DE)**
• **LÖER, Thomas**
**10961 Berlin (DE)**
• **MUTH, Oliver**
**12277 Berlin (DE)**
• **SEIDEL, Rainer**
**13467 Berlin (DE)**

(74) Vertreter: **KEIL & SCHAAFHAUSEN**
**Patentanwälte**
**Cronstettenstraße 66**
**60322 Frankfurt am Main (DE)**

(56) Entgegenhaltungen:
**EP-A- 1 387 215**          **WO-A-01/53113**
**DE-A1- 10 232 245**      **US-B1- 6 476 942**

**EP 1 725 914 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft einen Datenträger mit einer Kernschicht und mindestens einer angrenzenden, auf die Kernschicht laminierten Schicht, wobei die Kernschicht aus einem holografischen Datenspeicher in Form eines Volumenhologramms gebildet ist. Weiterhin betrifft die Erfindung ein Verfahren zur Herstellung eines Datenträgers mit einer Kernschicht und mindestens einer an die Kernschicht angrenzenden Schicht, wobei die Kernschicht aus einem holografischen Datenspeicher in Form eines Volumenhologramms gebildet ist, wobei die mindestens eine an die Kernschicht angrenzende Schicht auf die Kernschicht laminiert wird.

Als Datenträger werden in der vorliegenden Erfindung Chipkarten, Smartcards, Personaldokumente, Ausweise, Führerscheine, Schecks, Tickets sowie andere Wert- und Sicherheitsdokumente und Träger von Daten angesehen.

Ein Datenträger und ein Verfahren zur Herstellung eines derartigen Datenträgers nach der angegebenen Art ist in der Druckschrift DE 38 56 284 T2 beschrieben. Ein Volumenhologrammelement wird in ablösbarer Form auf ein Substrat zur Übertragung auf ein Wertdokument laminiert.

Bei einem Volumenhologramm oder Phasenhologramm vom Volumen-Typ (volume type phase hologram) werden in das Volumen eines lichtempfindlichen Materials durch kohärente Strahlung einer bestimmten Wellenlänge Bereiche mit unterschiedlichem Brechungsindex eingebracht. Diese Bereiche werden auch Bragg'sche Netzebenen genannt. Nach Fertigstellung des Volumenhologramms wird durch Bestrahlung des Volumenhologramms mit weißem Licht durch Brechung an den Bragg'sche Netzebenen und Interferenz in dem reflektierten Licht ein dreidimensionales Bild rekonstruiert. Das reflektierte Bild entsteht dabei nur bei der Wellenlänge und dem Winkel, in denen die ursprüngliche Bestrahlung erfolgte.

Aus der Druckschrift DE 40 21 908 C2 ist ein Datenträger bekannt, der ein Volumenhologramm enthält, das mit einer transparenten, dünnen Schutzfolie aus Polycarbonat (PC) oder anderen Materialien bedeckt ist.

In der Druckschrift EP 0 919 961 B1 ist ebenfalls ein Datenträger mit einem Volumenhologramm beschrieben. Dieses ist auf ein Substrat aufgebracht und weist durch örtliche Schrumpfungen und/oder Schwellungen eine Veränderung der Bragg'schen Netzebenen auf.

In der Druckschrift DE 69 201 698 T2 wird ein Verfahren zur Herstellung eines mehrfarbigen Volumenphasen-Hologramms beschrieben, wobei zunächst ein lichtempfindliches Filmelement mit kohärentem Licht bestrahlt wird, um ein Volumenhologramm in das Filmelement aufzuzeichnen. Anschließend wird das Filmelement in Kontakt mit einem Diffusionselement gebracht, das ein Monomer enthält, wobei das Monomer nach dem Kontakt in das Filmelement diffundiert. Durch die Diffusion des Monomers in das Filmelement wird die Wellenlänge des durch das Hologramm reflektierten Bildes vergrößert. Das holografische Bild erscheint somit in einer in Richtung Rot verschobenen Farbe. Die Wellenlängenverschiebung wird durch Polymerisation des Monomers nach der Diffusion fixiert bzw. durch eine vor der Diffusion durchgeführte Polymerisation örtlich gesteuert. Dies bedeutet, dass in Bereichen, in denen vor der Diffusion eine Polymerisation erfolgte, diese nicht stattfinden kann und somit auch keine Wellenlängenverschiebung erfolgt. Hierdurch sind mehrfarbige Bilder möglich. Dieses Verfahren zur Wellenlängenverschiebung ist aufwändig und hat den Nachteil, dass eine weitere, unter Umständen störende Substanz verwendet wird, welche die Eigenschaften von Datenträgern negativ beeinflussen kann.

Aus WO 01/53113 ist ein Datenträger gemäß dem Oberbegriff von Anspruch 1 bekannt.

Der Erfindung liegt die Aufgabe zugrunde, einen Datenträger der angegebenen Art zu schaffen, bei dem die Fälschungssicherheit gegenüber Datenträgern mit einem einfachen Volumenhologramm erhöht ist und die Möglichkeit einer nachträglichen individualisierung gegeben ist. Es sollten ferner im Design ansprechende Lösungen gefunden werden. Die Aufgabe bestand weiterhin darin, ein einfaches Herstellungsverfahren für einen derartigen Datenträger anzugeben, das weder material- noch kostenaufwändig ist.

Die Aufgabe wird erfindungsgemäß durch einer Datenträger gemäß Anspruch 1 gelöst, wobei die direkt an die Kernschicht angrenzende Schicht vor der Laminierung auf ihrer zur Kernschicht weisenden Oberfläche eine Rauigkeit aufweist, welche im Laminierten Zustand eine Wellenlängenverschiebung des vom Volumenhologramm rekonstruierten Bildes bewirkt. Die Aufgabe wird ebenfalls durch ein erfindungsgemäßes Verfahren zur Herstellung eines derartigen Datenträgers gelöst, bei dem die direkt an die Kernschicht angrenzende Schicht zur Laminierung mit einer zur Kernschicht weisenden Oberfläche bereit gestellt wird, die eine Rauigkeit aufweist, welche eine Wellenlängenverschiebung des vom Volumenhologramm rekonstruierten Bildes bewirkt.

Der erfindungsgemäße Datenträger weist eine höhere Fälschungssicherheit bei ansprechenden Designmöglichkeiten auf. Das erfindungsgemäße Verfahren ist weder kosten- noch materialaufwändig und lässt sich mit den herkömmlichen Herstellungsverfahren verwirklichen. Durch die Einbringung gezielter Rauigkeiten kann das fertig belichtete und in Masse gefertigte Volumenhologramm gezielt nachträglich individualisiert werden. Der erfindungsgemäße Datenträger zeigt weiterhin den überraschenden Vorteil, dass die direkt über der Kernschicht angeordnete Schicht sehr gut auf der Kernschicht haftet und somit bei einem Fälschungsversuch nur sehr schwer abziehbar ist. Gegebenenfalls würde das Volumenhologramm bei einem Fälschungsversuch zerstört werden. Das Volumenhologramm des erfindungsgemäßen Datenträgers weist in Bezug auf die Wellenlänge des kohärenten Lichtes, mit dem das Volumenhologramm erstellt wurde, eine Blauverschiebung, d.h. eine Verschiebung zu kleineren Wellenlängen, auf, die durch die Größe der Rauigkeit der angrenzenden Schicht gezielt gesteuert werden kann. Hierdurch wird es einem Fälscher sehr erschwert, das Volumenhologramm zu reproduzieren, da für einen Kopierversuch kohärentes Licht in mehreren Wellenlängen notwendig ist und die kontinuierlichen Verläufe der Wellenlängenverschiebung schwer nachzuahmen sind. Ein gefälschter Datenträger oder eine Kopie wäre durch lückenhafte Ausprägung des Volumenhologramms und die hierdurch fehlende Information erkennbar.

In vorteilhafter Weise beträgt die mittlere Rauigkeit etwa 5 μm bis 25 μm, vorzugsweise 10 μm bis 15 μm. Hierdurch wird eine Wellenlängenverschiebung des rekonstruierten Bildes in Richtung kürzere Wellenlängen um mindestens 20 nm erreicht. Im Folgenden wird dabei bei den angegebenen mittleren Rauigkeitswerten die gemittelte Rautiefe $R_z$ entsprechend der Norm DIN-EN ISO 4288 gemeint, deren Definition im Folgenden erläutert wird. Die Rauigkeit wird auf einer Oberfläche beispielsweise durch eine Nadel gemessen, die die Oberfläche abtastet und den Weg der Nadel senkrecht zur Oberfläche, im vorliegenden Fall senkrecht zur Schichtoberfläche, aufzeichnet. Die sogenannte gemittelte Rautiefe $R_z$ wird dadurch bestimmt, indem das arithmetische Mittel aus fünf Einzelrautiefen $R_i$ von fünf aufeinander folgenden Einzelmessstrecken auf der Oberfläche berechnet wird. Die Einzelrautiefe ist hierbei der Abstand zwischen dem gemessenen höchsten und niedrigsten Punkt der mit der Nadel abgetasteten Messstrecke.

$$R_z = \frac{1}{5} \sum_{5}^{i=1} R_i$$

Nach einem weiteren Vorschlag der Erfindung ist die Rauigkeit stochastisch verteilt, d.h. die Rauigkeitshöhen und -tiefen sind unregelmäßig mit unregelmäßig verteilten Höhen und Tiefen auf der der Kernschicht zugewandten Oberfläche der direkt an die Kernschicht angrenzenden Schicht angeordnet. Allein hierdurch ist eine gute Fälschungssicherheit insbesondere im Hinblick auf Trennungs- und Manipulationsversuche gegeben. Eine sehr gute Steuerbarkeit der Farbverschiebung ergibt sich, wenn die Oberfläche der direkt an die Kernschicht angrenzenden Schicht mit einem regelmäßigen Profil versehen ist. Dieses könnte beispielsweise ein Zackenprofil oder ein Profil mit abgerundeten Ecken sein. Ein derartiges Profil könnte vor dem Laminieren mittels eines Mikro-Prägestempels in die Oberfläche der an die Kernschicht angrenzenden Schicht eingeprägt werden.

Eine gute Gestaltungsmöglichkeit des Datenträgers kann erreicht werden, wenn die direkt an die Kernschicht angrenzende Schicht vor dem Laminieren auf der der Kernschicht zugewandten Oberfläche Bereiche mit unterschiedlichen Rauigkeiten aufweist. Die unterschiedlichen Bereiche können dabei die Formen von Ziffern, Buchstaben, Kreisen, Rechtecken oder anderen geometrischen Formen sowie Bildern annehmen. Die Bereiche können im Datenträger durch die unterschiedliche Wellenlänge des holografischen Bildes unterschieden werden. Hierdurch können zusätzliche Informationen dargestellt werden. Das mit einer derartigen Ausführungsform verbundene Herstellungsverfahren enthält den zusätzlichen Schritt, dass bestimmte Bereiche, die einer geringere Rauigkeit aufweisen sollen als die umliegenden Bereiche, geglättet oder mit einem regelmäßigen Relief versehen werden. Dies kann beispielsweise mittels eines Prägestempels erreicht werden.

Da Polycarbonat-(PC-)Schichten besonders gute Eigenschaften in bezug auf Biegefestigkeit und Verschleiß aufweisen, wird in vorteilhafter Weise die mindestens eine an die Kernschicht angrenzende Schicht aus Polycarbonat ausgeführt.

Eine zusätzliche Farbgestaltung kann in das Volumenhologramm integriert werden, wenn es örtliche Schrumpfungen oder Schwellungen aufweist. Hierdurch werden die Bragg'schen Netzebenen vergrößert oder verkleinert, so dass die Wellenlänge des rekonstruierten Bildes entsprechend verkleinert oder vergrößert wird. Eine besonders fälschungssichere und im Design ansprechende Lösung ergibt sich, wenn die Schrumpfung oder Schwellung in einem Bereich des Volumenhologramms einen Gradienten in Richtung der Fläche des Datenträgers aufweist. Hierdurch werden Farbübergänge erzielt.

Die Erfindung wird nachfolgend anhand von Ausführungsbeispielen näher erläutert, die in Zeichnungen dargestellt sind. Es zeigen

Figur 1    einen erfindungsgemäßen Datenträger in einer Ansicht von oben,

Figur 2    einen erfindungsgemäßen Datenträger in einem Querschnitt,

Figur 3    die Bestandteile eines erfindungsgemäßen Datenträgers vor der Laminierung im Querschnitt,

Figur 4    einen Ausschnitt der zur Kernschicht weisenden Oberfläche der direkt an die Kernschicht angrenzenden Schicht des erfindungsgemäßen Datenträgers vor der Laminierung, schematisch,

Figur 5    einen Ausschnitt der zur Kernschicht weisenden Oberfläche der direkt an die Kernschicht angrenzenden Schicht eines weiteren Ausführungsbeispiels eines erfindungsgemäßen Datenträgers vor der Laminierung, schematisch,

Figur 6      ein weiteres Ausführungsbeispiel eines erfindungsgemäßen Datenträgers in einer Ansicht von oben und

Figuren 7 und 8      zwei Ausschnitte aus unterschiedlichen Bereichen der zur Kernschicht weisenden Oberfläche der direkt an die Kernschicht angrenzenden Schicht dieses Ausführungsbeispiels vor der Laminierung.

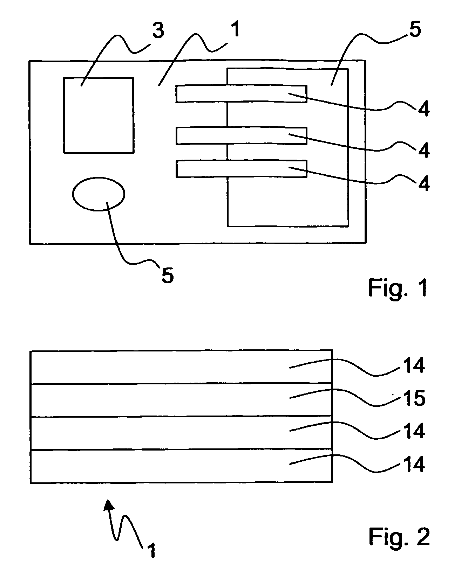

Figur 1 zeigt einen erfindungsgemäßen Datenträger 1, der verschiedene Sicherheitselemente aufweist. Sicherheitselemente sind Elemente, welche die Fälschungssicherheit des Datenträgers erhöhen. Beispielsweise sind auf den Datenträger 1 ein Bild 3 des Datenträgerinhabers und Druckdaten 4 zum Datenträgerinhaber aufgebracht, vorzugsweise mittels Bedrukken oder mittels Laserbeschriftung in eine laseraktive oder lasersensitive Schicht des Datenträgers. Der Datenträger kann weitere elektronische Komponenten wie RFID-Transponder, Chipmodule oder Antennen für Dual-Interface-Module enthalten. Der Datenträger weist außerdem Bereiche 5 auf, in denen ein Volumenhologrammelement angeordnet ist. Die Bereiche 5 können sich über den Datenträger partiell oder vollflächig erstrecken. Derartige Volumenhologramme können Bilder, Muster, Informationen bestehend aus Buchstaben oder Ziffern rekonstruieren, die sowohl visuell als auch maschinell ausgewertet werden können. Die visuelle Auswertung erfolgt durch das menschliche Auge, das prüft, ob die rekonstruierten Bilder, Muster oder Informationen mit einem vorgegebenen Bild, Muster oder Information übereinstimmen. Eine maschinelle Überprüfung kann durch Farbkontrolle mittels Bestimmung der Rekonstruktionswellenlänge und/oder des Beugungswirkungsgrads und/oder des Beugungsmusters erfolgen. Im Ergebnis kann eine Aussage über die Echtheit des Datenträgers anhand dieses Sicherheitselements getroffen werden. Maschinell oder visuell werden auch die übrigen Sicherheitselemente auf dem Datenträger ausgewertet.

Der in Figur 1 dargestellte Datenträger ist in Figur 2 im Querschnitt schematisch dargestellt. Der Datenträger 1 weist mehrere Schichten auf, wobei mit dem Bezugszeichen 14 weitere Schichten und mit dem Bezugszeichen 15 ein Photopolymerfilm bezeichnet ist, der das Volumenhologramm enthält. Diese innen liegende Schicht wird im Weiteren auch als Kernschicht 15 bezeichnet. Die Kernschicht kann auch einen Zwischenschicht sein. Oberhalb der Kernschicht ist eine Schicht 14 und unterhalb der Kernschicht 15 sind in diesem Ausführungsbeispiel weitere zwei Schichten 14 angeordnet. In weiteren Ausführungsbeispielen können ober- und/ oder unterhalb der Kernschicht 15 mindestens eine weitere Schicht oder eine beliebige größere Anzahl von weiteren Schichten angeordnet werden, die aus Polycarbonat (PC) und/oder PVC (Polyvinylchlorid) und/oder Polyester (z.B. Polyethylenterephtalat (PET)) und/oder Polyolefine (z.B. Polyethylen (PE), Polypropylen (PP)) und/ oder ABS (AcrylnitrilButadien-Styrol(-Copolymer)) und/ oder Polyurethan (PU) und/oder Polyetheretherketon (PEEK) und/oder anderen thermoplastisch verarbeitbaren Materialien oder Materialverbünden und/oder kunststoffkaschierten, papierartigen Materialien und/oder papierartigen Materialien wie Teslin zusammengesetzt sein können. In einem weiteren Ausführungsbeispiel können auch mehrere Kernschichten 15 in der Schichtenfolge des Datenträgers angeordnet sein. Die Schichten, auch die Kernschicht 15, müssen sich hierbei nicht, wie in dem anhand von Figur 2 dargestellten Ausführungsbeispiel, über die gesamte Breite des Datenträgers erstrecken. Sie können auch nur Teile der Breite oder Länge des Datenträgers einnehmen. Die Kernschicht 15 besteht aus einem Photopolymerfilm oder einem Silberhalogenidfilm. Die Kernschicht kann außerdem aus anderen, in der Holografie üblichen Aufnahme-Materialien (recording materials, recording media) bestehen. Eine Auswahl derartiger Materialien sind in der DE 692 01 698 T2 und in "Ullmanns Chemische Enzyklopädie", elektronische Ausgabe 2003 unter dem Stichwort "Materials used in Holography" angegeben.

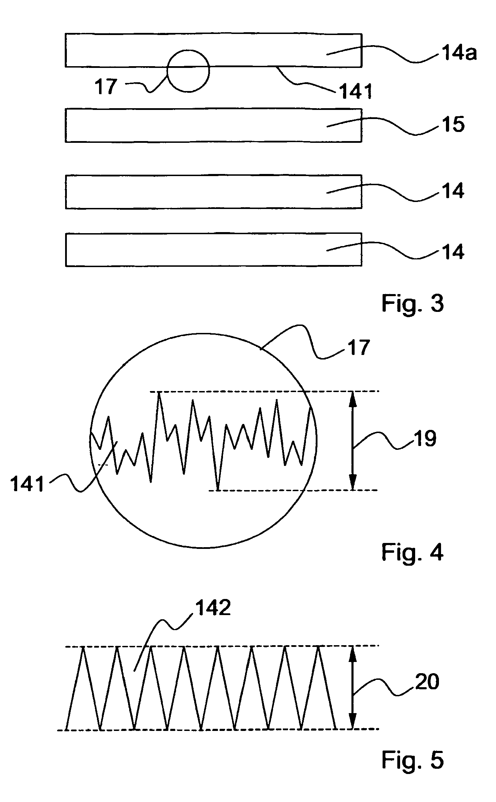

In Figur 3 sind die Schichten des erfindungsgemäßen Datenträgers noch einmal einzeln übereinander angeordnet im Querschnitt vor der Laminierung dargestellt. Die Photopolymer-Schicht 15 weist üblicherweise eine Schichtdicke von mindestens 5 $\mu$m, vorzugsweise 5 bis 50 $\mu$m, höchstvorzugsweise 10 $\mu$m bis 20 $\mu$m auf. Die übrigen Schichten 14 haben eine Dicke von mindestens 5 $\mu$m, vorzugsweise 5 $\mu$m bis 500 $\mu$m, höchstvorzugsweise 50 $\mu$m bis 100 $\mu$m. Die im fertig gestellten Datenträger in Richtung Betrachter an die Kernschicht 15 angrenzende, darüber liegende Schicht wird im Weiteren zur besseren Abgrenzung von den übrigen Schichten mit der Bezugsziffer 14a bezeichnet. Die zur Kernschicht 15 weisende Oberfläche 141 der an die Kernschicht 15 angrenzenden Schicht 14a ist in Figur 4 noch einmal in einem Ausschnitt 17 dargestellt. Die Oberfläche 141 weist eine stochastische Rauigkeit, d.h. unregelmäßig verteilte Erhebungen und Vertiefungen, auf. Die Rautiefe 19 für diesen Ausschnitt ist ebenfalls mittels eines Doppelpfeils eingezeichnet. Die gestrichelten Linien verweisen hierbei auf die maximale Höhe und die maximale Tiefe der Rauigkeit. In einem bevorzugten Ausführungsbeispiel beträgt die mittlere Rauigkeit 5 $\mu$m bis 25 $\mu$m, vorzugsweise 10 $\mu$m bis 15 $\mu$m. Bei einer derartigen Wahl der Rauigkeit kann nach dem Laminieren des Datenträgers eine Wellenlängenverschiebung des durch das Volumenhologramm rekonstruierten Bildes um mindestens 20 nm zu kleineren Wellenlängen erreicht werden (Blauverschiebung). Dabei ist die mittlere Rauigkeit proportional zur Höhe der Verschiebung.

Ein weiteres Ausführungsbeispiel für die Gestaltung der zur Kernschicht weisenden Oberfläche 142 der an die Kernschicht 15 angrenzenden Schicht 14a ist in Figur 5 dargestellt. Diese Oberfläche 142 weist ein regelmäßiges Relief in Zackenform auf, wobei sich die Rautiefe 20 in diesem Fall als Abstand zwischen Zakkental und Zackenberg ergibt. In einem weiteren Ausführungsbeispiel kann ein regelmäßiges Relief auch aus abgerundeten Zacken bestehen. Die in Figur 5 dargestellte Oberfläche 142 und andere Oberflächenreliefs können durch eine Mikroprägung in die Oberfläche 142 eingeprägt werden. Die mittlere Rauigkeit sollte sich hierbei vorzugsweise in dem oben genannten Bereich bewegen. Die Prägung muss dabei vor dem Zusammenstellen der Schichten vor der Laminierung erfolgen.

Die in Figur 3 dargestellten Bestandteile eines erfindungsgemäßen Datenträgers werden - wie dargestellt - zusammengelegt und beim erfindungsgemäßen Herstellungsverfahren anschließend mittels bekannter Laminierverfahren gefügt. Zu den bekannten Laminiereinrichtungen zählen unter anderem Rollenlaminatoren oder Thermotransferpressen. Vor dem Zusammenstellen der Schichten wurde bereits das Volumenhologramm nach den bekannten Verfahren in die Photopolymerschicht der Kernschicht 15 eingebracht und gegebenenfalls durch Entfernen von Schutz- und/oder Transferfolien präpariert. Hierfür kann beispielsweise das in der Druckschrift DE 198 09 503 A1 angegebene Verfahren verwendet werden. Das Volumenhologramm kann hierbei individuelle Daten und/oder konstante Daten enthalten. Hierbei werden unter individuellen Daten Daten verstanden, welche dem Inhaber des Datenträgers oder dem Datenträger selbst direkt oder indirekt zugeordnet und für diesen individuell sind. Derartige individuelle Daten können beispielsweise das Bild des Datenträgerinhabers oder die Dokumentennummer sein. Konstante Daten sind dem gegenüber für alle Inhaber der Datenträger oder für den jeweiligen Datenträgertyp gleich. Als konstante Daten können beispielsweise ein Wappen oder eine Beschriftung in Form eines Landescodes sein. Beim Laminieren werden auf den Folienstapel Drücke von wenigen bar und Temperaturen von wenigen 100°C angewendet. Durch das Laminieren werden die aneinander grenzenden Bereiche der jeweiligen Folien erweicht und ermöglichen so das feste Aufeinanderhaften der Folien nach Beendigung der Laminierung. Es wird so ein thermoplastischer Verbund hergestellt. Gegebenenfalls kann ein Haftvermittler vor dem Laminieren zwischen die einzelnen Folien aufgebracht werden. Zwischen der Kernschicht 15 und der rauen Oberfläche 141 der angrenzenden Schicht 14a darf jedoch kein Haftvermittler eingefügt werden. In weiteren Ausführungsbeispielen können beispielsweise jeweils nur die Schichten 14a und 15 und sowie die beiden Schichten 14 miteinander laminiert werden und anschließend beide Schichtverbunde in einem weiteren Laminierschritt. Es ist auch möglich, nach dem Laminieren der Schicht 14a und 15 die Schicht 14a auf der der Kernschicht 15 abgewandten Oberfläche mit einer Bedruckung zu versehen, die beispielsweise die Daten des Inhabers des Datenträgers beinhaltet. Die Schichten 14 und 14a können auch vor dem Laminieren bereits Bedruckungen aufweisen. In weiteren Ausführungsbeispielen können die Schichten 14 und 14a auch mit laseraktiven oder lasersensitiven Pigmenten versehen sein, die das Einbringen von Daten und/oder Bilder in die Schichten mittels Laser ermöglichen. Durch Laserbeschriftung (Laserengraving) wird ein Farbumschlag der Pigmente bewirkt, so dass hierdurch Informationen dargestellt werden können. Die Laserbeschriftung von Datenträger kann vor dem Laminieren und/oder zwischen verschiedenen Laminierschritten und/oder nach dem Laminieren der Schichten erfolgen.

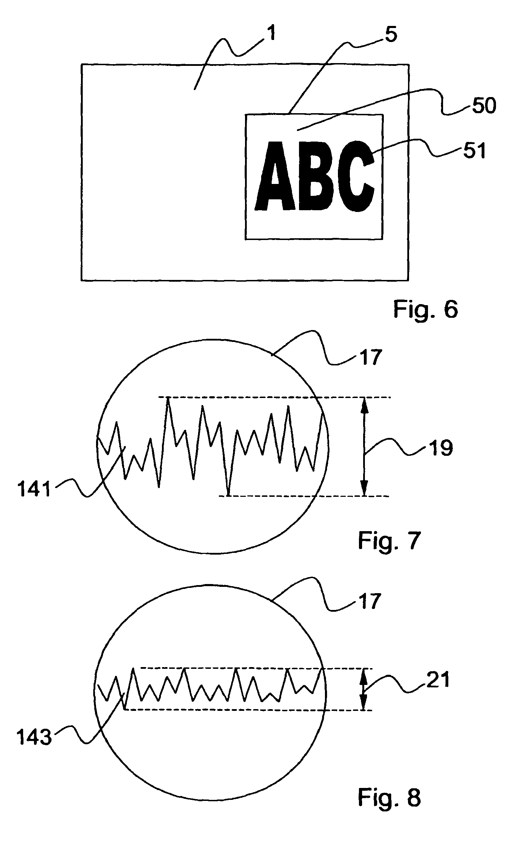

Ein weiteres Ausführungsbeispiel der Erfindung ist anhand von Figur 6 dargestellt. Der erfindungsgemäße Datenträger 1 weist im Bereich des Volumenhologramms 5 zwei Bereiche, einen ersten Bereich 50 und einen zweiten Bereich 51, auf, die für den Betrachter in unterschiedlichen Farben in Erscheinung treten. Beispielsweise weist der Bereich 50 eine blaue Farbe und der Bereich 51 eine rote Farbe auf. Der Bereich 51 hat hierbei die Form von Buchstaben "ABC", wobei der Bereich 51 auch beliebige andere Formen, z.B. Ziffern, Muster oder Bilder aufweisen könnte. In dem Bereich 51 wurde die an die Kernschicht angrenzende Schicht auf der zur Kernschicht weisenden Oberfläche vor dem Laminieren mit einem Stempel geglättet, so dass die Rauigkeit in diesem Bereich verkleinert wurde. Der Unterschied der Rauigkeiten in den beiden Bereichen ist anhand der Figuren 7 und 8 schematisch dargestellt. In Figur 7 ist die Rauigkeit der zur Kernschicht weisenden Oberfläche 141 der an die Kernschicht angrenzenden Schicht im Bereich 50 vor der Laminierung im Ausschnitt dargestellt. Die Rautiefe 19 dieses Ausschnitts ist durch einen Doppelpfeil angegeben. Die mittlere Rauigkeit des Bereichs 50 entspricht der anhand von Figur 3 und 4 dargestellten mittleren Rauigkeit. Figur 8 zeigt demgegenüber die Rauigkeit der zur Kernschicht weisenden Oberfläche 143 der angrenzenden Schicht im Bereich 51 vor der Laminierung in einem Ausschnitt. Die Rautiefe 21 ist ebenfalls durch einen Doppelpfeil angegeben und ist kleiner als die Rautiefe 19 des Bereichs 50 in Figur 7. Entsprechend ist die mittlere Rauigkeit im Bereich 51 kleiner als die mittlere Rauigkeit im Bereich 50. Beim Laminieren führt die geringere mittlere Rauigkeit im Bereich 51 zu einer geringeren Verschiebung der Bragg'schen Netzebenen und somit zu einem weniger ausgeprägten Wellenlängenshift des rekonstruierten Bildes des Volumenhologramms. Wurde also das Volumenhologramm durch kohärente Strahlung im sichtbaren, roten Wellenlängenbereich erzeugt, dann erscheint das aus dem Bereich 51 rekonstruierte Bild weiterhin rot, während das aus dem Bereich 50 rekonstruierte Bild blauverschoben ist. Der Betrachter kann somit farblich ein Unterschied zwischen den aus den Bereichen 50 und 51 rekonstruierten Bildern des Volumenhologramms erkennen.

In einem weiteren Ausführungsbeispiel kann der Bereich 51 auch mit einer definierten, regelmäßigen Prägung versehen sein, die eine höhere oder geringere mittlere Rauigkeit aufweist als der Bereich 50. Hierdurch erscheint der Bereich 51 entweder stärker blauverschoben oder geringer blauverschoben als der Bereich 50.

Um zusätzliche Farbgestaltungen zu erreichen, kann durch das gezielte Variieren der Laminiertemperatur über die Datenträgerfläche ein gezieltes Schrumpfen oder Schwellen der Bragg'schen Netzebenen des Volumenhologramms erreicht werden. Insbesondere kann durch einen in Richtung der Datenträgerfläche vorhandenen Temperaturgradienten ein Wellenlängengradient in einem durch das Volumenhologramm rekonstruierten Bild erreicht werden. Dem Betrachter erscheint ein derartiger Gradient als regenbogenartige Farbverschiebung. Beispielsweise kann bei einem Temperaturgradienten von etwa 20 K über eine Weglänge von 1 cm eine kontinuierliche Farbverschiebung von etwa 300 nm erreicht werden.

Besonders reizvoll für die Fälschungssicherheit sind Ausführungsbeispiele der Erfindung, in denen eine Farbverschiebung des rekonstruierten Bildes eines Volumenhologramms von einem nicht sichtbaren Wellenlängenbereich in einen sichtbaren oder von einem sichtbaren Wellenlängenbereich in einen nicht sichtbaren Wellenlängenbereich erfolgt. Die Farbverschiebung wird hierbei durch Rauigkeiten der angrenzenden Folie vor der Laminierung oder durch Schrumpfungen oder Schwellungen erzeugt. So kann bei genügend großen Rauigkeiten der über der Kernschicht angeordneten Folie vor dem Laminieren eine Wellenlängenverschiebung vom infraroten in den sichtbaren Wellenlängenbereich oder vom sichtbaren Wellenlängenbereich in den ultravioletten Wellenlängenbereich erfolgen. So wird beispielsweise ein im sichtbaren blauen Wellenlängenbereich belichtetes Volumenhologramm nach dem Fügen mit einer angrenzenden rauen Schicht nur durch Bestrahlung mit ultravioletter Strahlung rekonstruiert. Das rekonstruierte Bild und seine Eigenschaften können nur maschinell detektiert werden. Somit können versteckte, maschinell lesbare Informationen nachträglich in ein Volumenhologramm integriert werden. In einem weiteren Beispiel wird das Volumenhologramm durch Belichtung mit elektromagnetischer Strahlung im infraroten Wellenlängenbereich (z.B. mit Nd: YAG-Laser bei 1064 nm) erzeugt. Nach der Laminierung mit einer rauen, über dem Volumenhologramm angeordneten Folie mit der angegebenen mittleren Rauigkeit kann die Rekonstruktion des Hologramms im sichtbaren Wellenlängenbereich erfolgen.

In einem weiteren Ausführungsbeispiel können die direkt an die Kernschicht angrenzende Schicht 14a oder die weiteren Schichten 14 mit Linsenstrukturen oder anderen optisch aktiven Strukturen versehen sein.

Wenn eine Rekonstruktion des im Volumenhologramm der Kernschicht enthaltenen Bildes und/oder Daten durch die direkt angrenzende Schicht 14a hindurch erfolgt, muss die direkt angrenzende Schicht mindestens für den Wellenlängenbereich, in dem die Rekonstruktion des Bildes und/oder der Daten erfolgt, mindestens teiltransparent sein. In einem weiteren Ausführungsbeispiel kann die direkt angrenzende Schicht 14a, die vor der Laminierung eine Rauigkeit aufweist auch auf der Seite der Kernschicht 15 angeordnet sein, durch die die Rekonstruktion der im Volumenhologramm enthaltenen Daten und/oder Bilder nicht erfolgt.

Es versteht sich, dass die beschriebenen Wellenlängenverschiebungen auf Beugungen beliebiger Ordnung angewendet werden können.

## Patentansprüche

1. Datenträger mit einer Kernschicht (15) und mindestens einer angrenzenden, auf die Kernschicht (15) laminierten Schicht (14), wobei die Kernschicht aus einem holografischen Datenspeicher gebildet ist, und die zur Kernschicht weisende Oberfläche (141) der Laminierten Schicht vor der Laminierung mit der Kernschicht eine Rauigkeit aufweist, **dadurch gekennzeichnet, dass** die Kernschicht direkt an die Laminierte Schicht angrenzt, der holografische Datenspeicher in Form eines Volumenhologramms ausgebildet ist, und die Rauigkeit im Laminierten Zustand eine Wellenlängenverschiebung des vom Volumenhologramm rekonstruierten Bildes bewirkt.

2. Datenträger nach Anspruch 1, **dadurch gekennzeichnet, dass** die mittlere Rauigkeit für die Wellenlängenverschiebung des vom Volumenhologramm rekonstruierten Bildes von mindestens 20 nm etwa 5 $\mu$m bis 25 $\mu$m beträgt.

3. Datenträger nach einem der Ansprüche 1 oder 2, **dadurch gekennzeichnet, dass** die Rauigkeit stochastisch verteilt ist.

4. Datenträger nach einem der Ansprüche 1 oder 2, **dadurch gekennzeichnet, dass** die Rauigkeit regelmäßig in Form eines Zackenprofils vorliegt.

5. Datenträger nach einem der vorhergehenden Ansprüche, **dadurch gekennzeichnet, dass** unterschiedliche Bereiche der direkt an die Kernschicht angrenzenden Schicht vor dem Laminieren unterschiedliche Rauigkeiten aufweisen.

6. Datenträger nach Anspruch 5, **dadurch gekennzeichnet, dass** durch die Bereiche der direkt an die Kernschicht angrenzenden Schicht mit unterschiedlicher Rauigkeit eine Information in Form von Ziffern, Buchstaben, geometrischen Formen oder Bildern dargestellt ist.

7. Datenträger nach einem der vorhergehenden Ansprüche, **dadurch gekennzeichnet, dass** die angrenzende Schicht aus mindestens einem thermoplastisch verarbeitbarem Kunststoff, insbesondere Polycarbonat (PC) besteht.

**8.** Datenträger nach einem der Ansprüche 1 bis 6, **dadurch gekennzeichnet, dass** die angrenzende Schicht aus einem kunststoffkaschierten, papierartigen Material besteht.

**9.** Datenträger nach einem der vorhergehenden Ansprüche, **dadurch gekennzeichnet, dass** die angrenzende Schicht bedruckt ist.

**10.** Datenträger nach einem der vorhergehenden Ansprüche, **dadurch gekennzeichnet, dass** das Volumenhologramm örtlich geschrumpft oder geschwollen ist.

**11.** Datenträger nach Anspruch 10, **dadurch gekennzeichnet, dass** die Schrumpfung oder die Schwellung einen Gradienten in Richtung der Datenträgerfläche aufweist.

**12.** Datenträger nach einem der vorhergehenden Ansprüche, **dadurch gekennzeichnet, dass** mit zunehmender Rauigkeit der direkt angrenzenden Schicht eine Verschiebung der Wellenlänge des vom Volumenhologramm rekonstruierten Bildes zu kleineren Wellenlängen, d.h. eine Blauverschiebung, bewirkt wird.

**13.** Verfahren zur Herstellung eines Datenträgers mit einer Kernschicht und mindestens einer an die Kernschicht angrenzenden Schicht, wobei die Kernschicht aus einem holografischen Datenspeicher in Form eines Volumenhologramms gebildet ist, wobei die mindestens eine an die Kernschicht angrenzende Schicht auf die Kernschicht laminiert wird, **dadurch gekennzeichnet, dass** als die direkt an die Kernschicht angrenzende Schicht eine Schicht mit einer zur Kernschicht weisenden Oberfläche, die eine Rauigkeit aufweist, zur Laminierung bereit gestellt wird, wobei die Rauigkeit eine Wellenlängenverschiebung des vom Volumenhologramm rekonstruierten Bildes bewirkt.

**14.** Verfahren nach Anspruch 13, **dadurch gekennzeichnet, dass** die mittlere Rauigkeit für die Wellenlängenverschiebung des vom Volumenhologramm rekonstruierten Bildes von mindestens 20 nm etwa 5 $\mu$m bis 25 $\mu$m beträgt.

**15.** Verfahren nach einem der Ansprüche 13 oder 14, **dadurch gekennzeichnet, dass** die Rauigkeit durch ein regelmäßiges Relief erzeugt wird, das vor dem Bereitstellen der Schichten zum Laminieren in Bereichen der Oberfläche der Schicht durch thermische und mechanische Verformung eingeprägt wird, die direkt angrenzend zur Kernschicht angeordnet werden wird, wobei die eingeprägte Oberfläche zur Kernschicht weist.

**16.** Verfahren nach einem der Anspruch 13 bis 15, **dadurch gekennzeichnet, dass** Bereiche der zur Kernschicht weisenden Oberfläche der direkt an die Kernschicht angrenzenden Schicht vor der Laminierung geglättet werden.

**17.** Verfahren nach einem der Ansprüche 15 oder 16, **dadurch gekennzeichnet, dass** die Bereiche beliebige geometrische Formen und/oder Zifferform und/oder Buchstabenform und/oder Bildform aufweisen.

**Claims**

**1.** Data carrier with a core layer (15) and at least one adjacent layer (14) laminated to the core layer (15), wherein the core layer comprises a holographic data memory, and that surface (141) of the laminated layer that faces the core layer has a roughness prior to lamination to the core layer, **characterised in that** the core layer directly adjoins the laminated layer, the holographic data memory is designed to be in the form of a volume hologram, and the roughness in the laminated state effects a wavelength shift of the image reconstructed from the volume hologram.

**2.** Data carrier according to claim 1, **characterised in that** the average roughness for the wavelength shift of at least 20 nm of the image reconstructed from the volume hologram is approximately 5 $\mu$m to 25 $\mu$m.

**3.** Data carrier according to one of the claims 1 or 2, **characterised in that** the roughness is distributed stochastically.

**4.** Data carrier according to one of the claims 1 or 2, **characterised in that** the roughness is regular, in the form of a zigzag profile.

**5.** Data carrier according to one of the preceding claims, **characterised in that** different areas of the layer directly adjoining the core layer have different roughnesses prior to lamination.

**6.** Data carrier according to claim 5, **characterised in that** through the areas with differing roughness of the layer that is directly adjacent to the core layer, information in the form of numbers, letters, geometric shapes or images is represented.

**7.** Data carrier according to one of the preceding claims, **characterised in that** the adjacent layer comprises at least one plastic material, in particular polycarbonate (PC) that can be subjected to thermoplastic processing.

**8.** Data carrier according to one of the claims 1 to 6, **characterised in that** the adjacent layer comprises a paper-like material with a plastic coating.

**9.** Data carrier according to one of the preceding claims, **characterised in that** the adjacent layer is imprinted.

**10.** Data carrier according to one of the preceding claims, **characterised in that** the volume hologram is locally shrunk or swollen.

**11.** Data carrier according to claim 10, **characterised in that** the shrinkage or swelling has a gradient in the direction of the data carrier surface.

**12.** Data carrier according to one of the preceding claims, **characterised in that** with increasing roughness of the directly adjacent layer, the wavelength of the image reconstructed from volume hologram is shifted towards smaller wavelengths, i.e. a blue shift is effected.

**13.** Method for producing a data carrier with a core layer and at least one layer adjacent to the core layer, wherein the core layer comprises a holographic data memory in the form of a volume hologram, wherein the at least one layer adjacent to the core layer is laminated onto the core layer,
**characterised in that**
as the layer directly adjacent to the core layer, a layer with a surface which faces the core layer, and which has a roughness, is provided for lamination, wherein the roughness effects a wavelength shift of the image reconstructed from the volume hologram.

**14.** Method according to claim 13, **characterised in that** the average roughness for the wavelength shift of at least 20 nm of the image reconstructed from the volume hologram is approximately 5 $\mu$m to 25 $\mu$m.

**15.** Method according to one of the claims 13 or 14, **characterised in that** the roughness is produced by a regular relief which, prior to the layers being made available for lamination, is embossed, through thermal and mechanical deformation, in areas of the surface of the layer which will be arranged directly adjacent to the core layer, wherein the embossed surface faces the core layer.

**16.** Method according to one of the claims 13 to 15, **characterised in that** areas of the surface of the layer directly adjoining the core layer, and facing the core layer, are smoothed prior to lamination.

**17.** Method according to one of the claims 15 or 16, **characterised in that** the areas have any desired geometric forms and/or number forms and/or letter forms and/or image forms.

**Revendications**

**1.** Support de données comportant une couche centrale (15) et au moins une couche adjacente (14), stratifiée sur la couche centrale (15), la couche centrale étant constituée d'une mémoire de données holographique, et la surface (141) orientée vers la couche centrale de la couche stratifiée présentant une certaine rugosité avant la stratification avec la couche centrale, **caractérisé en ce que** la couche centrale est directement adjacente à la couche stratifiée, la mémoire de données holographique est configurée sous la forme d'un hologramme volumique, et la rugosité à l'état stratifié provoque un décalage en longueur d'onde de l'image reconstruite par l'hologramme volumique.

**2.** Support de données selon la revendication 1, **caractérisé en ce que** la rugosité moyenne pour le décalage en longueur d'onde d'au moins 20 nm de l'image reconstruite par l'hologramme volumique est comprise entre environ 5 $\mu$m et 25 $\mu$m.

**3.** Support de données selon la revendication 1 ou 2, **caractérisé en ce que** la rugosité est répartie de façon stochastique.

**4.** Support de données selon la revendication 1 ou 2, **caractérisé en ce que** la rugosité est régulière et sous la forme d'un profil dentelé.

**5.** Support de données selon l'une des revendications précédentes, **caractérisé en ce que** différentes zones de la couche directement adjacente à la couche centrale présentent différentes rugosités avant la stratification.

**6.** Support de données selon la revendication 5, **caractérisé en ce que,** du fait des zones de la couche directement adjacente à la couche centrale présentant une rugosité différente, on représente une information sous la forme de chiffres, de lettres, de formes géométriques ou d'images.

**7.** Support de données selon l'une des revendications précédentes, **caractérisé en ce que** la couche adjacente est constituée d'au moins une matière plastique pouvant être traitée par voie thermoplastique, en particulier du polycarbonate (PC).

**8.** Support de données selon l'une des revendications 1 à 6, **caractérisé en ce que** la couche adjacente est constituée d'une matière de type papier, doublée de plastique.

**9.** Support de données selon l'une des revendications précédentes, **caractérisé en ce que** la couche adjacente est imprimée.

**10.** Support de données selon l'une des revendications précédentes, **caractérisé en ce que** l'hologramme volumique est localement rétracté ou gonflé.

**11.** Support de données selon la revendication 10, **caractérisé en ce que** la rétraction ou le gonflement présente un gradient en direction de la surface du support de données.

**12.** Support de données selon l'une des revendications précédentes, **caractérisé en ce que,** au fur et à mesure que la rugosité de la couche directement adjacente augmente, on obtient un décalage en longueur d'onde de l'image reconstruite par l'hologramme volumique vers des longueurs d'onde plus petites, à savoir un décalage vers le bleu.

**13.** Procédé pour la fabrication d'un support de données comportant une couche centrale et au moins une couche adjacente à la couche centrale, la couche centrale étant constituée d'une mémoire de données holographique sous la forme d'un hologramme volumique, la au moins une couche adjacente à la couche centrale étant stratifiée sur la couche centrale, **caractérisé en ce que,** comme couche directement adjacente à la couche centrale, on prépare pour la stratification une couche ayant une surface orientée vers la couche centrale qui présente une certaine rugosité, la rugosité provoquant un décalage en longueur d'onde de l'image reconstruite par l'hologramme volumique.

**14.** Procédé selon la revendication 13, **caractérisé en ce que** la rugosité moyenne pour le décalage en longueur d'onde d'au moins 20 nm de l'image reconstruite par l'hologramme volumique est comprise entre environ 5 $\mu$m et environ 25 $\mu$m.

**15.** Procédé selon la revendication 13 ou 14, **caractérisé en ce que** la rugosité est réalisée par un relief régulier qui est estampé par une déformation thermique et mécanique dans des zones de la surface de la couche avant la préparation des couches pour la stratification, laquelle déformation sera disposée de manière directement adjacente à la couche principale, la surface estampée étant orientée vers la couche principale.

**16.** Procédé selon l'une des revendications 13 à 15, **caractérisé en ce que** des zones de la surface orientée vers la couche principale de la couche directement adjacente à la couche principale sont lissées avant la stratification.

**17.** Procédé selon la revendication 15 ou 16, **caractérisé en ce que** les zones présentent une quelconque forme géométrique et/ou de chiffre et/ou de lettre et/ou d'image.

3     1                                          5

4

4

4

5                              Fig. 1

14

15

14

14

1                              Fig. 2

EP 1 725 914 B1

Fig. 3

Fig. 4

Fig. 5

1

5

50

51

**ABC**

Fig. 6

17

19

141

Fig. 7

17

21

143

Fig. 8

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3856284 T2
- DE 4021908 C2
- EP 0919961 B1

- DE 69201698 T2
- WO 0153113 A
- DE 19809503 A1